# EUROPEAN PATENT SPECIFICATION

(11) **EP 2 880 090 B1**
(45) Date of publication and mention of the grant of the patent: **08.03.2017**
(21) Application number: 12815763.3
(22) Date of filing: 29.10.2012
(51) Int. Cl.: C08K 3/04, C08K 7/00, C08L 7/00, C08L 7/02, C08K 3/22, C08K 5/09, C08K 5/18, C08K 5/47

(54) **IMPROVED NATURAL RUBBER COMPOSITIONS**
VERBESSERTE NATÜRLICHE KAUTSCHUKZUSAMMENSETZUNGEN
COMPOSITIONS AMÉLIORÉES DE CAOUTCHOUC NATUREL

(30) Priority: 02.08.2012 WO PCT/MY2012/000221
(43) Date of publication of application: 10.06.2015
(73) Proprietor: Amril AG, 6304 Zug (CH)
(72) Inventor: ISMAIL, Surina, 60000 Kuala Lumpur (MY); SAMSURI, Azemi, Bin, 40150 Shah Alam Selangor Darul Ehsan (MY)
(74) Representative: Wilson, Gary
(86) International application number: PCT/IB2012/002563
(87) International publication number: WO 2014/020374

(56) References cited:
- EP-A1- 1 466 940
- EP-A1- 2 338 697
- EP-A1- 2 366 559
- EP-A2- 1 659 158
- EP-A2- 1 749 853
- WO-A1-03/060002
- WO-A1-2012/080158
- US-A1- 2012 190 772

## Description

### Field of the Invention

The present invention relates to improved natural rubber compositions. More particularly, the present invention relates to improved natural rubber compositions having nanocarbon and carbon black as reinforcing agents wherein the nanocarbon is uniformly pre-dispersed within the rubber component.

### Background of the Invention

The rubber industry is the second largest industry in the world after iron and steel, with 92% of global supplies of natural rubber from Asia, and its major use in commercial terms relating to the manufacture of tyres with a recent projection of global demand to reach 3.3 billion units creating a market of $220 billion by 2012. As such, the drive to provide products for all sectors within this market, high-performance, heavy duty, automobile, truck, bus and such like is extremely high.

Following the discovery of nanosized carbon structures, also referred to as nanocarbon/nanotubes, and their unique combination of extraordinary strength, for example tensile strength greater than steel with only one sixth of its weight, and efficient heat conductivity properties, there has been great interest in using such materials, such as for example carbon nanotubes (CNTs) also sometimes referred to as buckytubes which are allotropes of carbon, as reinforcing agents in polymer structures.

It has been postulated that CNTs may have greater affinity, and therefore potential to improve strength, in unsaturated hydrocarbon-based polymer matrices, rather than saturated systems. Early studies by Qianet. al., Applied Physics Letters, 2000: 76(20), p. 2868-2870 confirmed that addition of relatively low amounts of CNTs to the unsaturated polystyrene polymer matrix led to significant improvements in tensile strength and stiffness and has contributed to the desire to incorporate CNTs into other polymer systems.

There are numerous publications relating to the utility of nanoparticles as reinforcing agents for various thermoplastic polymers but relatively few relating to the utility of nanocarbon in unsaturated hydrocarbon-based polymer natural rubber (NR), *cis-*polyisoprene.

It is thought that the combination of the specific nature of natural rubber and in particular it's inherent high viscosity, and the difficulties associated with delivering nanocarbon in particulate form into the desired mixing environment have made effective incorporation, also referred to as dispersion, of nanocarbon into natural rubber a challenge. Thus it would be desirable to provide rubber compositions having nanocarbon dispersed within the rubber component (as a masterbatch) thereof.

Carbon black has been used as a reinforcing agent for rubber products, and in particular to increase tread wear resistance for over a century. In the 1940s carbon black use was complemented by the introduction of highly active silicas. Carbon black or silicone-based materials (silicas or silanes) are now commonly used as reinforcing agents, or fillers, to improve the tensile strength and mechanical properties of rubber products, and in particular rubber for use in tyres. Carbon black is generally considered to be more effective for reinforcing rubber tyre treads than silica unless a coupling agent to enhance the bonding between the silica particles and the rubber is also used. Typically, tyres utilise relatively high levels of carbon black (20 - 50 parts per hundred rubber, pphr) depending upon the tyre type. As reported by Carretero-Gonzalez et al., "Effect of Nanoclay on Natural Rubber Microstructure", Macromolecules, 41 (2008), p6763, use of large amounts of such mineral fillers can lead to heavy final products and replacement with nanoparticles may have advantages for filler distribution within the rubber.

It has long been an objective in tyre design to provide a tyre which has desirable (low) rolling resistance whilst delivering desirable (high) wet grip and wear resistance. A proven approach to resolving this dichotomy has been to replace some (or all) of the carbon black reinforcing agent in the tyre tread with a silica reinforcing agent. This has resulted in tyres capable of higher performance, but with a correspondingly higher cost due to inclusion of the silica and coupling components.

It has also been proposed that nanomaterials, such as CNTs, may have potential as replacement mineral fillers because of their small size, high surface area and excellent aspect ratio. Abdul-Lateef et al., "Effect of MWSTs on the Mechanical and Thermal Properties of NR", The Arabian Journal for Science and Engineering, Vol 35, No. 1 C, (2010), p 49, reported that tensile strength, elasticity and toughness were linearly improved with increasing levels of CNT.

WO 03/060002 disclosed rubber compositions comprising low-purity CNTs as potential replacement reinforcing agents for either all or part of the carbon black component and demonstrated that replacing an equivalent amount of the carbon black component with multi-walled, MWCNT, in a rubber composition suitable for use in tyres, led to improved tensile strength and elasticity.

It is an object of at least one aspect of the present invention to obviate or mitigate at least one or more of the aforementioned problems.

It is a further object of at least one aspect of the present invention to provide improved natural rubber compositions having nanocarbon and carbon black as reinforcing agents suitable for use in vehicle tyres for the automotive industry.

### Summary of the Invention

The Applicant has now developed a novel rubber composition suitable for use in tyres with nanocarbon and carbon black as reinforcing agents and which includes a unique ratio of rubber: nanocarbon : carbon black wherein the nanocarbon is uniformly pre-dispersed within the rubber component. The novel and inventive formulations developed by the Applicant provide both processing advantages such as longer cure time and performance advantages such as longer blow out time and low heat build-up in addition to demonstrating desirable physical properties such as tensile strength, hardness, elasticity, resilience and the like.

Until recently it has not yet been possible to fully explore and exploit the potential of nanocarbon as a rubber reinforcing agent due to dispersion associated difficulties in processing. The Applicant has also developed a novel process for the provision of masterbatches comprising nanocarbon pre-dispersed in rubber. Formulations according to the invention utilise such masterbatches for the rubber and nanocarbon component.

The Applicant has found that it is possible to provide rubber compositions, suitable for use in tyres, having improvements in wear abrasion and rolling resistance, reduced heat build-up-(HBU) and longer blowout times, as well as providing desirable strength, hardness and resistance, when compared to conventional rubber compositions, by utilising particular mixtures of nanocarbon, uniformly pre-dispersed within natural rubber, and carbon black as reinforcing agents.

Thus, according to a first aspect of the present invention there is provided rubber compositions comprising a mixture of natural rubber, nanocarbon and carbon black wherein the relative amount in parts per hundred rubber (pphr) of nanocarbon to carbon black is in the range of 1 : 40 to 1 : 2 and the relative amount in parts per hundred rubber
(pphr) of nanocarbon to natural rubber is in the range of 1 : 100 to 10 : 100 and wherein the nanocarbon component is pre-dispersed within the natural rubber component.

The present invention therefore provides rubber compositions having improved thermal and heat resistance properties and desirable strength, hardness and reduced rolling-resistance as provided by utilising particular mixtures of nanocarbon, which has been uniformly pre-dispersed within natural rubber, and carbon black as reinforcing agents.

The relative ratio of nanocarbon to carbon black may be in the range of any of the following: 1 : 30 to 1 : 3; 1 : 20 to 1 : 5 or 1 : 18 to 1 : 6.

The relative ratio of nanocarbon to natural rubber may be in the range of any of the following: 1 : 100 to 8 : 100; 2 : 100 to 6 : 100; 2 : 100 to 5 : 100.

The rubber component may contain from 1 to 10, 1 to 8, 1 to 6 or 2 to 5 pphr nanocarbon.

The carbon black may be present at a level of from 10 to 50 or 20 to 40 pphr.

As detailed hereinbefore, it is an object of the compositions of the invention to provide rubber products, and in particular tyres having desirable physical characteristics such as to provide a tyre which has desirable (low) rolling resistance in combination with delivering desirable (high) wet grip and wear resistance. Surprisingly, the Applicant has now found that compositions of the invention achieve desirable resilience, and in particular desirable rolling resistance and wear resistance performance, in the absence of silica, or a silica-containing filler component, and of an optional, additional Si-coupling component. Specific embodiments of the present invention therefore do not contain any silica and Si-coupling agent.

Thus, according to a further aspect of the present invention there is provided rubber compositions comprising a mixture of natural rubber, nanocarbon and carbon black wherein the relative amount in parts per hundred rubber (pphr) of nanocarbon to carbon black is in the range of 1 : 40 to 1 : 2 and the relative amount in parts per hundred rubber
(pphr) of nanocarbon to natural rubber is in the range of 1 : 100 to 10 : 100 and
wherein the nanocarbon component is pre-dispersed within the natural rubber component and optionally wherein there is no silica or silica containing reinforcing components.

According to a further aspect there is provided rubber compositions as described hereinbefore wherein the reinforcing component does not contain silica or silica based agents.

According to a further aspect there is provided rubber compositions as described hereinbefore wherein the reinforcing component consists of one or more carbon based agents.

According to a further aspect there is provided rubber compositions as described hereinbefore wherein nanocarbon and carbon black are the only reinforcing components.

Any natural sourced rubber product may be used in the compositions according to the invention including: unprocessed and processed latex products such as ammonia containing latex concentrates; RSS, ADS or crepes; TSR, SMR L, SMR CV; or speciality rubbers SP, MG, DP NR; or field grade (cup lump) rubber products such as TSR, SMR 10,
SMR 20, SMR 10 CV, SMR 20 SV, SMR GP. Further examples of natural rubbers suitable for use herein include chemically modified natural rubber products including: epoxidized natural rubbers (ENRs) such as for example ENR 25 and ENR 50. For the avoidance of doubt, all references to rubber in relation to the compositions according to the invention are to natural rubber as defined herein.

Preferred for use in the compositions herein are rubbers from a masterbatch having a pre-determined amount of nanocarbon pre-dispersed therein wherein the rubber is produced from a latex concentrate such as for example high ammonia natural rubber (HA NR) or low ammonia natural rubber (LA NR) and especially HA NR.

Nanocarbon (NC) as defined herein relates to nanosized carbon structures and includes: all types of single, double, or multi-wall carbon nanotubes (CNTs) and mixtures thereof; carbon nanotubes (CNTs), all types of carbon nanofibres (CNFs) and mixtures thereof; all types of graphite nanofibres (GNFs) and mixtures thereof; and mixtures of different nanosized carbon structures. CNTs or GNFs suitable for use herein include for example helical, linear or branched type.

Any nanocarbon (NC) as defined herein may be used for the preparation of a rubber-nanocarbon masterbatch according to the process outlined hereinafter. CNTs and GNFs are preferred; CNTs having a length of < 50 pm and/or an outer diameter of < 20nm are preferred and especially CNTs having a C-purity of > 85% and non-detectable levels of free amorphous carbon. The concentration of nanocarbon, and in particular CNT or GNF, pre-dispersed in the natural rubber masterbatch may preferably be 5g or less of nanocarbon per 100g of rubber. In other words the masterbatch may preferably contain no more than 5 parts by weight (pphr) nanocarbon per 100 parts by weight of rubber. Masterbatches suitable for use herein may, for example, include from 2 to 5 pphr nanocarbon. Preferred masterbatches for use may herein include: from about 2 to
5 pphr CNT, preferably from about 2.5 to 4.5 pphr CNT, more preferably from 3 to 4 pphr CNT; from 2 to 5 pphr PGNF, preferably from 3 to 5 pphr PGNF, more preferably from 4 to 5 pphr GNF; and mixtures thereof. Particularly preferred masterbatches include 3 pphr CNF and 5 pphr GNF.

Thus the present invention provides rubber compositions having nanocarbon and carbon black as reinforcing agents wherein the relative amount in parts per hundred rubber (pphr) of nanocarbon to carbon black is in the range of from 1 : 40 to 1 : 2 and the relative amount in parts per hundred rubber (pphr) of nanocarbon to natural rubber is in the range of from 1 : 100 to 10 : 100 and wherein the nanocarbon
component is pre-dispersed within the natural rubber component wherein the rubber is produced from a HA NR latex concentrate.

Typically, the nanocarbon may be pre-dispersed into the natural rubber according to the process described in Example 1 herein.

Thus according to a second aspect of the present invention there is provided rubber compositions having nanocarbon and carbon black as reinforcing agents wherein the relative amount in parts per hundred rubber (pphr) of nanocarbon to carbon black is in the range of about from 1 : 40 to 1 : 2 and the relative amount in parts per hundred rubber
(pphr) of nanocarbon to natural rubber is in the range of from 1 : 100 to 10 : 100 and wherein the nanocarbon component is pre-dispersed within the natural rubber component and wherein said rubber component is from a masterbatch produced via:
(a) formation of an aqueous slurry containing a dispersion of nanocarbon, at a level of from 2% to 10%by weight of the aqueous. slurry, and a surfactant and optionally a stabiliser;
(b) grinding of the aqueous nanocarbon containing slurry;
(c) combination of the aqueous slurry with a natural rubber latex concentrate or diluted latex solution and mixing until a uniform mixture is obtained;
(d) coagulation of the mixture followed by aqueous washing, and removal of excess surfactant, water and excess optional stabilisers by coagulate squeezing or suitable alternative method;
(e) formation of dried rubber nanocarbon masterbatches by either direct drying of the coagulate from step (d) or by coagulate cutting to granulate size and subsequent drying
wherein the pH of the slurry and latex are similar or equivalent prior to combination, and wherein the pH of the nanocarbon may be adjusted using a suitable base to align it to the pH of the rubber latex.

Typically, the pH of the slurry and latex may be within 2, 1 or 0.5 pH units prior to combination.

Moreover, the formation of the aqueous slurry may contain a dispersion of nanocarbon at a level of from 3% to 5% by weight of the aqueous slurry and a
surfactant and optionally a stabiliser.

Any carbon black suitable for reinforcing natural rubber may be used in the formulations according to the invention. Examples of suitable carbon black include: super abrasion furnace (SAF N110); intermediate SAF 1N220; high abrasion furnace (HAF N330); easy processing channel (EPC N300); fast extruding furnace (FEF N550); high modulus furnace (HMF N683); semi-reinforcing furnace (SRF N770); fine thermal (FT N880); and medium thermal (MT N990).

Carbon black may be included at a level of from 10 pphr to 50 pphr; 20pphr to 40 pphr, preferably from 25 pphr to 35 pphr and preferably from 30 pphr to 35 pphr in compositions according to the invention. ISAF N220 is a preferred form of carbon black for
use in compositions according to the invention. The Applicant has found that the compositions of the invention, which use it are possible to significantly reduce levels of carbon black, versus standard rubber compositions, as demonstrated in the Examples hereinafter, are capable of delivering both improvements in key processing attributes, such as for example cure time, as well as improvements in highly desirable performance
attributes, such as for example increased blowout time, increased resilience. In particular the compositions of the invention include carbon black at from 20% to less than 40%, and preferably from 25% to 35% and more preferably from 30% to 35% of carbon black to 100% of rubber.

The Applicants has also found that particular combinations of reinforcing agents are valuable for the delivery of desirable properties in the compositions according to the invention. Such combinations are illustrated in the Examples hereinafter.

For the avoidance of doubt where amounts of any materials or components are referred to herein as pphr this means parts per hundred rubber.

Further agents which may be incorporated into the rubber compositions include: one or more curing agents; one or more activators; one or more delayed-accelerators; one or more antioxidants; one or more processing oils; one or more waxes; one or more scorch inhibiting agents; one or more processing aids; one or more tackifying resins; one or more reinforcing resins; one or more peptizers, and mixtures thereof.

Examples of suitable vulcanization agents for inclusion to the rubber compositions of the invention include sulphur or other equivalent "curatives". Vulcanization agents, also referred to as curing agents, modify the polymeric material (polyisoprene) in the natural rubber containing component to convert it into a more durable material for commercial utility,
and may be included at a level of from 1 pphr to 4 pphr, preferably from 1 pphr to 3 pphr and preferably from 1.5 pphr to 2.5 pphr in formulations according to the invention. Sulphur is the preferred vulcanization agent for incorporation into the compositions according to the invention.

Examples of suitable vulcanization activating agents for inclusion to the rubber compositions of the invention include zinc oxide (ZnO), stearic acid (octadecanoic acid), stearic acid/palmitic acid mixture, or other suitable alternatives. It is thought that vulcanization activating agents essentially accelerate the vulcanization process by promoting the effectiveness of the curing agent. Vulcanization activating agents can be included at a total level of from 2 pphr to 10 pphr, preferably from 3 pphr to 7 pphr and
preferably from 4 pphr to 6 pphr. Zinc oxide and stearic acid are preferred vulcanization activating agents for incorporation into the compositions according to the invention at individual levels of zinc oxide at a level of from 1.5 pphr to 6 pphr, preferably from 2 pphr to 4 pphr and preferably 3 pphr and stearic acid at from 0.5 pphr to 4 pphr, preferably from 1 pphr to 3 pphr and
preferably 2 pphr.

Examples of suitable vulcanization delayed-accelerators for inclusion in the rubber compositions of the invention include any one or combination of the following: N-tertiary- butyl-benzothiazole-sulphenamide (TBBS);2.2'-Dibenzothiazole Disulfide (MBTS); 2-(2,4-Dinitrophenylthio) benzothiazole (DNBT);Diethyldiphenylthiuram disulphide;Tetramethylthiuram disulphide;N,N-dicyclohexyl-2-benzothiazole sulfenamide (DCBS);N-oxydiethylenethiocarbamyl-N'-oxydiethylenesulphenamide (OTOS) and the like. It is thought that vulcanization delayed-accelerators essentially assist the vulcanization process by increasing the vulcanization rate at higher temperatures. Vulcanization delayed-accelerators agents can be included at a level of from 0.5 pphr to 3 pphr,
preferably 1 pphr to 2 pphr, and especially 1.5 pphr. TBBS is preferred as
a vulcanization delayed-accelerator for incorporation into the compositions according to the invention.

Examples of suitable antioxidants for inclusion to the rubber compositions of the invention include any one of or combination of the following: N-(1,3-dimethylbutyl)-N'-phenyl-p-phenylenediamine (6PPD);2-mercaptobenzimidazole compounds; 2-benzimidazolethiol;Dialkylateddiphenylamines;octylated diphenylamine; Nickel dibutyldithiocarbamate; N-isopropyl-N'-phenyl-p-phenylenediamine;4'-diphenyl-isopropyl-dianiline and 2,2'-Methylenebis(6-tert-butyl-4-methylphenol). Antioxidants can be included at a level of from 0.5 pphr to 3 pphr, preferably from 0.5 pphr to 1.5
pphr, and especially 1 pphr 6PPD is preferred as antioxidant in the compositions according to the invention.

Examples of suitable processing oils for inclusion in the rubber compositions of the invention include napthanlenic oils such as Shellflex 250MB. Processing oils can be included at a level of from 2 pphr to 6 pphr, preferably from 3 pphr to 5 pphr,
and especially 4 pphr Shellflex 250MB is preferred as processing oil in the compositions according to the invention.

Examples of suitable optional additional reinforcing agents for inclusion in the rubber compositions of the invention include one or more silicas and/or silanes, such as for example: silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2, VN3, VN3 GR; silanes commercially available from Evonik such as Si 363® and Si 69® (Bis[3-(triethoxysilyl)propyl]tetrasulfide). Where an optional, additional silica based reinforcing agent is used then a suitable coupling agent, such as a silane may
also be included.

Additional agents which can be included into the compositions also include peptizers (e.g. AP - zincPentachlorobenzenethiol zinc, WP-1, HP).

The composition of the present invention may be used in a range of component parts of heavy vehicle tyres such as truck tyres, bus tyres,car tyres, aircraft tyres or tyres for an earth moving vehicle.

The composition of the present invention may therefore be used in a range of tyre components suitable for use in the manufacture of tyres for heavy duty vehicles, such as truck or bus tyres, light duty vehicles, such as car tyres, vehicles for use in earth moving, construction or engineering, civil engineering, or for use on aircraft.

The rubber composition of the present invention may also be used in any part of the tyre such as the tread, inner liner, sidewall and shoulder where the tread makes its transition to the sidewall.

### Detailed Description - Experimental Methods

The various physical properties of the compositions exemplified can be measured according to any of the standard methodologies as are known in the art. For example, onset of vulcanisation can be detected via an increase in viscosity as measured with a Mooney viscometer (Vs). Similarly viscosity measurements can be used to measure incipient cure (scorch) times and the rate of cure in early stage vulcanisation. In particular, cure characteristics can be measured using a rheometer such as a Monsanto Rheometer. These measurements can be made according to various internationally accepted standard methods ASTM D1616-07(2012) (http://www.astm.org/Standards/D1646.htm). Density (specific gravity), elasticity (M100, M300), tensile strength as measured according to (ISO 37) ASTM D412-06ae2 (http://www.astm.org/Standards/D412.htm). Elongation at break (EB) as measurable by the method described in http://www.scribd.com/doc/42956316/ Rubber-Testing.Hardness (International Rubber Hardness Degree, IRHD) as measured according to (ISO 48) ASTM D1415-06(2012) (http://www.astm.org/Standards/D1415.htm). Resilience (%) as measured according to ASTM D7121-05 (http://www.astm.org/Standards/D7121.htm). Abrasion resistance index (ARI), tan delta as measurable by the methods described in (http://findarticles.com/p/articles/mi_hb6620/is_5_241/ai_n53029843/).

Heat build-up and blowout as measurable by the methods described in http://www.dtic.mil/dtic/tr/fulltext/u2/a193058.pdf.

### Process Example

As described hereinbefore, nanocarbon may be pre-dispersed into the natural rubber according to the process described herein. Masterbatches suitable for use in the compositions according to the invention have levels of pre-dispersed nanocarbon contained within the rubber component produced according to this process of from 1 to 10, 1 to 8, 1 to 6 or 2 to 5 pphr nanocarbon. Process Example 1 illustrates the production of a 2pphr masterbatch. Masterbatches containing other nanocarbon levels can be made via appropriate adjustment of the components.

### Part 1 - Preparation of Nanocarbon Slurry and Nanocarbon Dispersion

A 1 % nanocarbon dispersion was prepared as follows: 3g of nanocarbon was put into a glass beaker (500ml) containing 15g of a surfactant and 282g of distilled water. The mixture was stirred by means of mechanical stirrer at 80rpm for about 10 minutes to obtain a nanocarbon slurry. The slurry was transferred to a ball mill for grinding to break down any agglomerates of nanocarbon. Ball milling was done for 24 hours to obtain a nanocarbon dispersion, which was then transferred into a plastic container.

The surfactant was used in the form of a 10% to 20% solution. In an analogous manner, a 3% nanocarbon dispersion was prepared from 9g of nanocarbon, 45g of surfactant and 246g of distilled water. The pH of dispersion was adjusted (by adding KOH) to that of the latex to which it was to be added.

### Part 2 - Preparation of Nanocarbon-Containing Natural Rubber Master Batches

The nanocarbon dispersion prepared as described above was mixed with high ammonia natural rubber latex concentrate (HANR latex). The latex concentrate was first diluted with distilled water to reduce its concentration in order to reduce the viscosity of the latex to facilitate mixing with the nanocarbon dispersion. The mixing with the nanocarbon dispersion was then done in the presence of about 5pphr of surfactant (employed as a-5% to 20% solution).

The nanocarbon dispersion and the surfactant were discharged into a beaker containing the natural rubber (NR) latex. The mixture was subjected to mechanical stirring. The NR latex was then coagulated with acetic acid. The coagulum formed was washed with water and squeezed to remove excess
surfactants and water. The coagulum was cut into small granules and washed with water. These granules were then dried in an electrically heated oven until they were fully dried to obtain a nanocarbon containing natural rubber masterbatch.

The amount of nanocarbon in the dispersion and the amount of the dispersion and the latex are chosen so as to obtain a predetermined ratio of nanocarbon to rubber (expressed herein in terms of pphr). More specifically the masterbatch contained 2pphr of nanocarbon.

The following non-limiting examples are representative of the compositions of the invention.

### Example Formulations 1 to 5

Formulations 1 to 5 are suitable for use in heavy duty vehicular applications such as truck and bus tyre treads.

Formulations 3 to 5 are representative of the compositions of the invention and formulations 1 and 2 are comparative examples based upon a commercially available Standard Malaysian Rubber (SMR10). All components are expressed as pphr rubber, for example CNT MB 103 means that there are 3 pphr of CNT in 100 parts of rubber masterbatch MB (dried NR latex) and stearic acid "2" means that there are 2 parts of stearic acid per 100 parts of rubber.

| **Ingredients** | **1** | **2** | **3** | **4** | **5** |
|---|---|---|---|---|---|
| Rubber, SMR10 | 100 | 100 | - | - | - |
| Rubber-CNT MB | - | - | *103 | - | - |
| Rubber-CNT MB | - | - | - | *105 | **105 |
| Activator, Zinc oxide | 3 | 3 | 3 | 3 | 3 |
| Activator, Stearic acid | 2 | 2 | 2 | 2 | 2 |
| Antioxidant, 6PPD | 1 | 1 | 1 | 1 | 1 |
| Carbon Black, N220 | 52 | 40 | 35 | 30 | 30 |
| Oil, Shellflex 250MB | 4 | 4 | 4 | 4 | 4 |
| Accelerator, TBBS | 1.4 | 1.4 | 1.4 | 1.4 | 1.4 |
| Curing agent, Sulfur | 1.5 | 1.5 | 1.5 | 1.5 | 1.5 |
| Reinforcer, Silica (VN3) | - | 12 | - | - | - |
| Silica coupling agent, Si69 | - | 1.0 | - | - | - |
| Polyethylene glycol, PEG | - | 0.5 | - | - | - |

| | | | | | |
|---|---|---|---|---|---|
| * Carbon nanotubes having a length of <50µm and an outer diameter of <20nm; it had a C-purity of >85% and non-detectable free Amorphous carbon. Employed as supplied i.e. as agglomerated bundles of CNTs with average dimensions of 0.05 to 1 .5mm. ** GNF, platelet graphite nanofibers | | | | | |

### Experimental Results

As illustrated in Table 1, the uncured rubber compositions according to the invention were demonstrated to have lower Mooney viscosity and improved cure times compared to that of comparator compositions 1 and 2.

**TABLE 1**

| Properties related to Curing | 1 | 2 | 3 | 4 | 5 |
|---|---|---|---|---|---|
| V∘ (M_{L} (1+4), 100°C) | 62.3 | 66.1 | 38.4 | 54.3 | 34.4 |
| Scorch time, t2 (minutes) at 150°C | 2.6 | 2.5 | 2.5 | 2 | 2.3 |
| Cure time, t95 (minutes) at 150°C | 8 | 8.4 | 11.5 | 12 | 12 |

As illustrated in Table 2, all cured formulations according to the invention demonstrated improved blowout time versus comparator formulation 1, and, a cured formulation according to the invention demonstrated improved thermal and blow out properties, when compared to the comparator formulations. All the formulations according to the invention demonstrate either the same as, or lower Tan δ values than Comparator Formula 2 which indicates that formulations of the invention are capable of delivering desirable low rolling resistance performance without the use of silica. Formulation 5
delivered improved (higher) resilience than comparator formula 2 which is a yet further indicator of the desirable rolling resistance performance achievable by formulations according to the invention. All formulations according the invention demonstrated improved ARI values versus Comparator formula 1 and either comparable or improved values, versus Comparator Formula 2 which is an indication of their ability to provide desirable wear
performance without the use of a silica reinforcing agent.

**TABLE 2**

| Property | 1 | 2 | 3 | 4 | 5 |
|---|---|---|---|---|---|
| Elongation at break, EB (%) | 569 | 584 | 523 | 523 | 532 |
| Resilience (%) | 58 | 63 | 57 | 61 | 70 |
| tan δ (°) at 60°C | 0.11 | 0.09 | 0.09 | 0.09 | 0.07 |
| Abrasion Resistance Index, ARI (%) | 103.9 | 108.1 | 109 | 114 | 107 |
| Heat build-up, HBU, at 55°C (minutes) | 20.4 | 16 | 20.4 | 20.4 | 13.5 |
| Blowout time at 100°C (minutes) | 11.0 | Not tested | 24 | 14.0 | 60 |

Resilience is an important property of tread rubber compound since it affects rolling resistance and heat build-up. The higher the resilience, the lower the rolling resistance and heat build-up (HBU). The lower the rolling resiliance the less fuel is required to propel the vehicle forward. Formulations 4 and 5 demonstrated the highest resilience.

Tan δ is a measure of rolling resistance of a rubber compound. Formulations 5 gave the lowest rolling resistance.
Abrasion resistance (ARI) is a measure of associated with potential wear resistance of tyre treads.

Heat build-up (HBU) is an important property in tyre tread formulations. Failure known as blowout occurs in the shoulder region of the tread if excessive HBU is generated in the shoulder region. Formulation 5 gave the lowest HBU.

Formulations 3, 4 and 5 all took longer time to blowout than the comparator formulation 1. The longer the time it takes for blowout failure to occur, the longer is the service life and the safer is the tyre.

As illustrated in Table 3, formulations of the invention display desirable strength and hardness properties.

**TABLE 3**

| Physical Property | 1 | 2 | 3 | 4 | 5 |
|---|---|---|---|---|---|
| Density (Mgcm⁻³) | 1.1138 | 1.1206 | 1.0891 | - | 1.0807 |
| M100 (MPa) | 2.4 | 2.2 | 2.93 | 2.93 | 2.09 |
| M300 (MPa) | 12.6 | 11.7 | 12.17 | 12.2 | 10.6 |
| Tensile strength (MPa) | 29.4 | 29.0 | 29.0 | 28.0 | 27.0 |
| Elongation at Break (%) | 569 | 584 | 523 | 523 | 532 |
| Hardness (IRHD) | 69 | 64 | 74 | 74 | 64 |

Whilst specific embodiments of the present invention have been described above, it will be appreciated that departures from the described embodiments may still fall within the scope of the present invention. For example, any suitable type of nanoparticle and carbonblack may be used. Moreover, any type of natural rubber may be used.

## Claims

1. A rubber composition comprising a mixture of natural rubber, nanocarbon and carbon black reinforcing agents wherein the relative amount in parts per hundred rubber (pphr) of nanocarbon to carbon black is in the range of 1 : 40 to 1 : 2 and the relative amount in parts per hundred (pphr) of nanocarbon to natural rubber is in the range of 1 : 100 to 10 : 100 wherein the nanocarbon component is pre-dispersed within the natural rubber component and wherein the nanocarbon is a nanosized carbon structure.

2. A rubber composition according to claim 1, wherein the relative ratio of nanocarbon to carbon black in pphr is in the range of any of the following: 1 : 30 to 1 : 3; 1 : 20 to 1 : 5 or 1 : 18 to 1 : 6.

3. A rubber composition according to any of claims 1 or 2, wherein the relative ratio of nanocarbon to natural rubber in pphr is in the range of any of the following: 1 : 100 to 8 : 100; 2 : 100 to 6 : 100 or 2 : 100 to 5 : 100.

4. A rubber composition according to any preceding claim, wherein the rubber component contains from 1 to 10, 1 to 8, 1 to 6 or 2 to 5 pphr nanocarbon.

5. A rubber composition according to any preceding claim, wherein carbon black is present at a level of from 10 to 50 or 20 to 40 pphr.

6. A rubber composition according to any preceding claim, wherein nanocarbon and carbon black are the only reinforcing agents, or wherein there is no silica and Si coupling agent.

7. A rubber composition according to any preceding claim, wherein the natural rubber is selected from any one of or combination of the following: unprocessed and processed latex products such as ammonia containing latex concentrates; RSS, ADS or crepes; TSR, SMR L, SMR CV; especially rubbers SP, MG,DP, NR; or field grade (cup lump) rubber products such as TSR, SMR 10, SMR 20, SMR 10 CV, SMR 20 SV, SMR GP; wherein the natural rubber is selected from chemically modified natural rubber products including: epoxidized natural rubbers (ENRs) such as for example ENR 25 and ENR 50.

8. A rubber composition according to any preceding claim containing a vulcanizing agent; one or more delaying accelerators; one or more activating agents; one or more antioxidants.

9. A tyre comprising at least one component part made from a rubber composition as defined in any of claims 1 to 8.

10. A tyre according to claim 9, wherein the rubber composition as defined in any of claims 1 to 8 is used in the tread of the tyre.

11. A tyre according to claim 9, wherein the rubber composition as defined in any of claims 1 to 8 is used in tyre components such as the inner liner, sidewall and shoulder where the tread makes its transition to the sidewall.

12. A tyre according to any of claims 9 to 11, wherein the tyre is a heavy vehicle tyre such as a truck tyre, a bus tyre, a car tyre, an aircraft tyre or a tyre for an earth moving vehicle.

13. Use of a rubber composition according to any claims 1 to 8 for use in the manufacture of component parts for tyres such as the treads, inner liner, sidewall and shoulder where the tread makes its transition to the sidewall.

14. A rubber composition having nanocarbon and carbon black as reinforcing agents wherein the relative amount in parts per hundred rubber (pphr) of nanocarbon to carbon black is in the range of about from 1 : 40 to 1 : 2 and the relative amount in parts per hundred rubber (pphr) of nanocarbon to natural rubber is in the range of from 1 : 100 to 10 : 100 and wherein the nanocarbon component is pre-dispersed within the natural rubber component and wherein said rubber component is from a masterbatch produced via:
(a) formation of an aqueous slurry containing a dispersion of nanocarbon, at a level of from 2% to 10% by weight of the aqueous slurry, and a surfactant and optionally a stabiliser;
(b) grinding of the aqueous nanocarbon containing slurry;
(c) combination of the aqueous slurry with a natural rubber latex concentrate or diluted latex solution and mixing until a uniform mixture is obtained;
(d) coagulation of the mixture followed by aqueous washing, and removal of excess surfactant, water and excess optional stabilisers by coagulate squeezing or suitable alternative method;
(e) formation of dried rubber nanocarbon masterbatches by either direct drying of the coagulate from step (d) or by coagulate cutting to granulate size and subsequent drying;
wherein the pH of the slurry and latex are similar or equivalent prior to combination, and wherein the pH of the nanocarbon may be adjusted using a suitable base to align it to the pH of the rubber latex.

15. A rubber composition according to claim 14, wherein the formation of the aqueous slurry contains a dispersion of nanocarbon at a level of from 3% to 5% by weight of the aqueous slurry and a surfactant and optionally a stabiliser, and wherein the pH of the slurry and latex are within 2, 1 or 0.5 pH units prior to combination.

## Patentansprüche

1. Kautschuk-Zusammensetzung, die eine Mischung aus Naturkautschuk, Nanocarbon und Kohleschwarz-Verstärkungsmitteln umfasst, wobei die relative Menge in Teilen pro Hundert Kautschuk (pphr) von Nanocarbon zu Kohleschwarz im Bereich von 1 : 40 bis 1 : 2 liegt und die relative Menge in Teilen pro Hundert (pphr) von Nanocarbon zu Naturkautschuk im Bereich von 1 : 100 bis 10 : 100 liegt, wobei das Nanocarbon-Bestandteil innerhalb des Naturkautschuk-Bestandteils vordispergiert ist und, wobei das Nanocarbon eine nanosierte Kohlenstoffstruktur ist.

2. Kautschuk-Zusammensetzung nach Anspruch 1, wobei das relative Verhältnis von Nanocarbon zu Kohleschwarz in pphr im Bereich irgendeines des Folgenden liegt: 1 : 30 bis 1 : 3; 1 : 20 bis 1 : 5 oder 1 : 18 bis 1 : 6.

3. Kautschuk-Zusammensetzung nach einem der Ansprüche 1 oder 2, wobei das relative Verhältnis von Nanocarbon zu Kohleschwarz in pphr im Bereich irgendeines des Folgenden liegt: 1 : 100 bis 8 : 100; 2 : 100 bis 6 : 100 oder 2 : 100 bis 5 : 100.

4. Kautschuk-Zusammensetzung nach einem vorhergehenden Anspruch, wobei das Kautschuk-Bestandteil von 1 bis 10, 1 bis 8, 1 bis 6 oder 2 bis 5 pphr Nanocarbon enthält.

5. Kautschuk-Zusammensetzung nach einem vorhergehenden Anspruch, wobei das Kohleschwarz in einer Höhe von 10 bis 50 oder 20 bis 40 pphr anwesend ist.

6. Kautschuk-Zusammensetzung nach einem vorhergehenden Anspruch, wobei Nanocarbon und Kohleschwarz die einzigen Verstärkungsmittel sind, oder wobei kein Silizium und Si-Haftmittel vorliegen.

7. Kautschuk-Zusammensetzung nach einem vorhergehenden Anspruch, wobei der Naturkautschuk aus einem oder einer Kombination des Folgenden selektiert ist: unverarbeiteten und verarbeiteten Latex-Produkten wie beispielsweise Ammoniak, das Latex-Konzentrate enthält; RSS, ADS oder Krepps; TSR, SMR L, SMR CV; spezielle Kautschuks SP, MG,DP, NR; oder Feldqualität- (Schalenklumpen) Gummiprodukte wie beispielsweise TSR, SMR 10, SMR 20, SMR 10 CV, SMR 20 SV, SMR GP; wobei der Naturkautschuk aus chemisch modifizierten Naturkautschuk-Produkten selektiert ist, die einschließen: epoxidierte Naturkautschuks (ENRs) wie beispielsweise ENR 25 und ENR 50.

8. Kautschuk-Zusammensetzung nach einem vorhergehenden Anspruch, die ein Vulkanisationsmittel; einen oder mehrere verzögernden Beschleunigern; ein oder mehrere Aktivierungsmittel; einen oder mehrere Antioxidationsmittel enthält.

9. Reifen, der wenigstens ein Bestandteil umfasst, das aus einer Kautschuk-Zusammensetzung, wie in einem der Ansprüche 1 bis 8 definiert, hergestellt ist.

10. Reifen nach Anspruch 9, wobei die Kautschuk-Zusammensetzung, wie in einem der Ansprüche 1 bis 8 definiert, in der Lauffläche eines Reifens verwendet wird.

11. Reifen nach Anspruch 9, wobei die Kautschuk-Zusammensetzung, wie in einem der Ansprüche 1 bis 8 definiert, in Reifenbestandteilen wie beispielsweise der Innenverkleidung, Seitenwand und Schulter verwendet wird, wo die Lauffläche ihren Übergang zur Seitenwand macht.

12. Reifen nach einem der Ansprüche 9 bis 11, wobei der Reifen ein Reifen für schwere Fahrzeuge, wie beispielsweise ein Lkw-Reifen, ein Busreifen, ein Autoreifen, ein Flugzeugreifen oder ein Reifen für ein Erdbewegungsfahrzeug ist.

13. Verwendung einer Kautschuk-Zusammensetzung nach einem der Ansprüche 1 bis 8 zum Gebrauch bei der Herstellung von Bestandteilen für Reifen wie beispielsweise die Laufflächen, Innenverkleidung, Seitenwand und Schulter wo die Lauffläche ihren Übergang zu Seitenwand macht.

14. Kautschuk-Zusammensetzung mit Nanocarbon und Kohleschwarz als Verstärkungsmittel, wobei die relative Menge in Teilen pro Hundert Kautschuk (pphr) von Nanocarbon zu Kohleschwarz im Bereich von ca. 1 : 40 bis 1 : 2 liegt und die relative Menge in Teilen pro Hundert Kautschuk (pphr) von Nanocarbon zu Naturkautschuk im Bereich von 1 : 100 bis 10 : 100 liegt und wobei das Nanocarbon-Bestandteil innerhalb des Naturkautschuk-Bestandteils vordispergiert ist und, wobei das Kautschuk-Bestandteil aus einem Masterbatch ist, der produziert wurde über:
(a) Bildung eines wässrigen Schlamms, der eine Dispergierung von Nanocarbon, in einer Höhe von 2 Gew.-% bis 10 Gew.-% des wässrigen Schlamms und eine oberflächenaktive Substanz und optional ein Stabilisiermittel enthält;
(b) Mahlen des Nanocarbon enthaltenden wässrigen Schlamms;
(c) Kombination des wässrigen Schlamms mit einem Naturkautschuk-Latexkonzentrat oder einer verdünnten Latex-Lösung bis eine uniforme Mischung erhalten wird;
(d) Koagulation der Mischung gefolgt von wässrigem Waschen und Entfernen von überschüssigem oberflächenaktivem Mittel, Wasser und überschüssigen optionalen Stabilisiermitteln durch Quetschen des Koagulats oder geeignetes alternatives Verfahren;
(e) Bildung von getrockneten Kautschuk-Nanocarbon-Masterbatches entweder durch direktes Trocknen des Koagulats aus Schritt (d) oder durch Schneiden des Koagulates auf Körnchengröße und nachfolgendes Trocknen;
wobei der pH-Wert des Schlamms und Latex vor Kombination ähnlich oder gleich ist und, wobei sich der pH-Wert des Nanocarbons unter Verwendung einer geeigneten Base einstellen lässt, um ihn auf den pH-Wert des Kautschuk-Latex auszurichten.

15. Kautschuk-Zusammensetzung nach Anspruch 14, wobei die Bildung des wässrigen Schlamms eine Dispergierung aus Nanocarbon in einer Höhe von 3 Gew.-% bis 5 Gew.-% des wässrigen Schlamms und ein oberflächenaktives Mittel und optional ein Stabilisiermittel enthält und, wobei der pH-Wert des Schlamms und des Latex vor Kombination innerhalb von 2, 1 oder 0,5 pH-Einheiten liegt.

## Revendications

1. Composition de caoutchouc comprenant un mélange de caoutchouc naturel, de nanocarbone et du noir de carbone, des agents de renforcement, dans laquelle la quantité relative en parties pour cent de caoutchouc (ppc) de nanocarbone au noir de carbone se situe dans la plage de 1:40 à 1:2 et la quantité relative en parties pour cent (ppc) de nanocarbone au caoutchouc naturel est comprise dans la fourchette de 1:100 à 10:100, dans laquelle le composant de nanocarbone est pré-dispersé dans le composant de caoutchouc naturel et dans laquelle le nanocarbone est une structure de carbone nanométrique.

2. Composition de caoutchouc selon la revendication 1, dans laquelle le rapport relatif du nanocarbone au noir de carbone en ppc est dans la fourchette de l'un des éléments suivants : 1:30 à 1:3; 1:20 à 1:5 ou 1:18 à 1:6.

3. Composition de caoutchouc selon l'une des revendications 1 ou 2, dans laquelle le rapport relatif du nanocarbone au caoutchouc naturel en ppc est dans la fourchette de l'un des éléments suivants : 1:100 à 8:100 ; 2:100 à 6:100 ou 2:100 à 5:100.

4. Composition de caoutchouc selon l'une quelconque des revendications précédentes, dans laquelle le composant de caoutchouc contient de 1 à 10, 1 à 8, 1 à 6 ou 2 à 5 ppc de nanocarbone.

5. Composition de caoutchouc selon l'une quelconque des revendications précédentes, dans laquelle le noir de carbone est présent à un niveau allant de 10 à 50 ou 20 à 40 ppc.

6. Composition de caoutchouc selon l'une quelconque des revendications précédentes, dans laquelle le nanocarbone et le noir de carbone sont les seuls agents de renforcement, ou dans laquelle il n'y a pas de silice et d'agent de couplage Si.

7. Composition de caoutchouc selon l'une quelconque des revendications précédentes, dans laquelle le caoutchouc naturel est choisi parmi l'un quelconque ou une combinaison des éléments suivants : les produits en latex non transformés et transformés tels que les concentrés de latex contenant de l'ammoniaque ; RSS, ADS ou crêpes ; TSR, SMR L, SMR CV ; notamment les caoutchoucs SP, MG, DP, NR ; ou des produits en caoutchouc de qualité sur le terrain (vrac) tels que TSR, SMR 10, SMR 20, SMR 10 CV, SMR 20 SV, SMR GP ; dans laquelle le caoutchouc naturel est choisi parmi les produits de caoutchouc naturel chimiquement modifiés incluant : les caoutchoucs naturels époxydes (ENR) tels que par exemple ENR 25 et ENR 50.

8. Composition de caoutchouc selon l'une quelconque des revendications précédentes, contenant un agent de vulcanisation ; un ou plusieurs accélérateurs retardateurs ; un ou plusieurs agents d'activation ; un ou plusieurs antioxydants.

9. Pneumatique comprenant au moins une composante constituée d'une composition de caoutchouc telle que définie dans l'une quelconque des revendications 1 à 8.

10. Pneumatique selon la revendication 9, dans laquelle la composition de caoutchouc telle que définie dans l'une quelconque des revendications 1 à 8 est utilisée dans la bande de roulement du pneumatique.

11. Pneumatique selon la revendication 9, dans laquelle la composition de caoutchouc telle que définie dans l'une quelconque des revendications 1 à 8 est utilisée dans les composants de bandage pneumatique tel que la doublure intérieure, la paroi latérale et l'épaulement où la bande de roulement effectue sa transition vers la paroi latérale.

12. Pneumatique selon l'une des revendications 9 à 11, dans laquelle le pneumatique est un pneumatique de véhicule lourd tel qu'un pneumatique de camion, un pneumatique de bus, un pneumatique de voiture, un pneumatique d'avion ou un pneumatique pour un véhicule de terrassement.

13. Utilisation d'une composition de caoutchouc selon l'une quelconque des revendications 1 à 8 pour une utilisation dans la fabrication de composants pour pneumatiques tels que les bandes de roulement, la doublure intérieure, la paroi latérale et l'épaulement où la bande de roulement effectue sa transition vers la paroi latérale.

14. Composition de caoutchouc comprenant du nanocarbone et du noir de carbone comme agents de renforcement, dans laquelle la quantité relative en parties pour cent de caoutchouc (ppc) de nanocarbone au noir de carbone se situe dans la fourchette d'environ 1:40 à 1:2 et la quantité relative en parties pour cent de caoutchouc (ppc) de nanocarbone au caoutchouc naturel est comprise dans la fourchette de 1:100 à 10:100 et dans laquelle le composant de nanocarbone est pré-dispersé dans le composant de caoutchouc naturel et dans laquelle ledit composant de caoutchouc provient d'un mélange maître produit via :
(a) la formation d'une suspension aqueuse contenant une dispersion de nanocarbone, à un niveau allant de 2% à 10% en poids de la suspension aqueuse et un tensioactif et éventuellement un agent stabilisant ;
(b) le broyage de la suspension aqueuse contenant du nanocarbone ;
(c) la combinaison de la suspension aqueuse avec un concentré de latex de caoutchouc naturel ou d'une solution diluée de latex et leur mélange jusqu'à obtention d'un mélange uniforme ;
(d) la coagulation du mélange suivi par un lavage aqueux, et l'élimination de l'excès de tensioactif, de l'eau et l'excès de stabilisants facultatifs par compression des coagulats ou autre procédé approprié ;
(e) la formation de mélanges maîtres de nanocarbone de caoucthouc secs soit par séchage direct du coagulat de l'étape (d) ou par découpage des coagulats à la taille des granulats et leur séchage subséquent ;
dans laquelle le pH de la suspension et le pH du latex sont similaires ou équivalents avant la combinaison et dans laquelle le pH du nanocarbone peut être ajusté en utilisant une base appropriée pour l'aligner sur le pH du latex de caoutchouc.

15. Composition de caoutchouc selon la revendication 14, dans laquelle la formation de la suspension aqueuse contient une dispersion de nanocarbone à raison de 3% à 5% en poids de la suspension aqueuse et d'un tensioactif et éventuellement d'un stabilisant et dans laquelle le pH de la suspension et le pH du latex sont de l'ordre de 2, 1 ou 0,5 unités de pH avant la combinaison.
